# EUROPEAN PATENT SPECIFICATION

(11) **EP 1 880 877 B1**
(45) Date of publication and mention of the grant of the patent: **11.03.2009**
(21) Application number: 07111562.0
(22) Date of filing: 02.07.2007
(51) Int. Cl.: B60C 27/14

(54) **Attachment device with cam lever for snow chains**
Befestigungsvorrichtung mit Nockenhebel für Schneeketten
Dispositif de fixation avec levier à cames pour chaînes anti-neige

(30) Priority: 18.07.2006 IT MI20061392
(43) Date of publication of application: 23.01.2008
(73) Proprietor: MAGGI CATENE S.p.A., 23854 Olginate (LECCO) (IT)
(72) Inventor: Bouvier, Jean-Pierre, 1070, PUIDOUX-GARE (CH); Maggi, Giuseppe, 23900, LECCO (IT)
(74) Representative: Faggioni, Carlo Maria

(56) References cited:
- EP-A- 0 595 306
- EP-A- 1 496 274
- EP-A1- 1 604 843
- DE-U1- 8 529 687

## Description

The present invention concerns a device for the attachment of a snow chain to a wheel of a motorvehicle, in particular a device for the attachment to a wheel bolt.

The Applicant has successfully developed a snow chain technology which makes fitting a chain to the tyre particularly easy and effective, thanks to the provision of elastic support arms which are suited to firmly push the chain onto the tyre during wheel rolling. An exhaustive description of this chain is found for example in application EP 1 562 764 in the name of the same Applicant, whose contents are hereby fully incorporated by reference.

A peculiarity of these chains is that the assembly of arms is secured to the wheel of the vehicle through a device which grips the head of one or more of the bolts locking the wheel onto the hub thereof. For such purpose, various devices have already been put forth, some of which also very effective, such as the one illustrated in EP1562764.

A clamping device according to the preamble of claim 1 is known from EP-A1-1 604 843.

The Applicant, however, set himself the task of developing and offering on the market a new attachment device, which may be even handier to operate, especially for some classes of users who are unable to impart a sufficient turning torque with their wrist to the manoeuvring knob intended to tighten a bush of the attachment device on the bolt.

Such object is achieved by a device as described in its essential features in the appended claim 1.

In particular, a device of the type comprising a gripping portion, consisting at least of a deformable bell-shaped body and a cooperating hollow cylinder element, mutually engageable with one another more or less deeply by means of a control stem integral with the bell-shaped body, running through a hole of a bottom portion of the hollow cylinder element, further comprising
a cam-shaped body, attachable to the stem in an axial direction and provided with a cam profile capable of cooperating with the outer bottom portion surface, and
a manoeuvring lever member, capable of causing a rotation of the cam-shaped body which determines a shifting of the hollow cylinder element with respect to the stem and hence with respect to the bell-shaped body.

Other inventive aspects of the device are described in the dependent claims.

Further features and advantages of the device according to the invention will in any case be more evident from the following detailed description of a preferred embodiment of the same, given purely by way of example and illustrated in the accompanying drawings, wherein:

fig. 1 is a perspective view of the device according to the invention;

fig. 2 is an elevation side view of the device according to the invention in a locked position;

fig. 3 is an exploded view of the device of fig. 1; and

figs. 4A and 4B are perspective views of two details of the device illustrated in fig. 1.

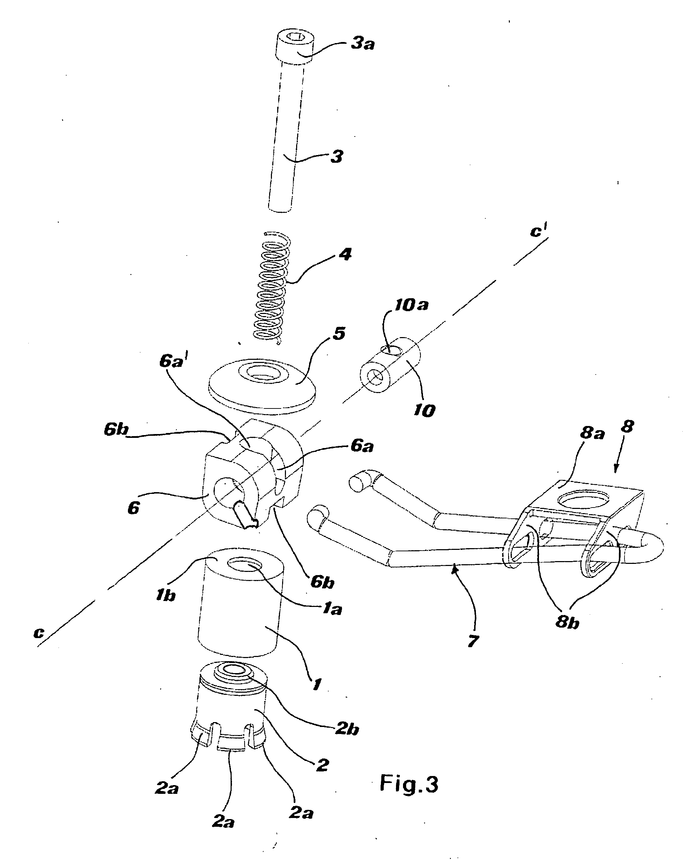

With reference to fig. 3, the tightening device comprises, in a manner known per se, a gripping portion comprising a hollow cylinder element 1 within which there is slidably engaged a bell-shaped body 2 provided with deformable elements 2a intended to "grip" the head of a bolt to establish a firm engagement. The mode and function of the mutual cooperation between hollow cylinder element 1 and bell-shaped body 2 is fully described in EP1562764 and no further details will hence be supplied here.

According to the invention, deformable bell-shaped body 2 further has a joining portion 2b (for example a threaded hole) by which it is made integral with the end of a threaded stem 3, at least in an axial direction, which stem is provided, at its other end, with a manoeuvring head 3a, such as a socket for an Allen wrench.

Stem 3 engages with threaded hole 2b passing through a helical spring 4, a plate 5, a cam-shaped body 6 and a hole 1a practised in a closing bottom portion 1b of hollow cylinder 1.

Helical spring 4 is shaped and sized so as to abut on the one hand against the undercut of manoeuvring member 3a and, on the other hand, against the upper surface of plate 5. Thereby, plate 5 is kept pushed against cam-shaped body 6 which, in turn, is hence kept compressed between the plate and the surface of bottom portion 1b of hollow cylinder element 1.

Cam-shaped body 6, as can be appreciated from the drawings, is mounted pivoting about a horizontal axis c-c', which intercepts the axis of stem 3. For such purpose, cam-shaped body 6 is preferably provided with a small cylinder 10 inside, mounted freely rotating about axis c-c', but locked in a transversal direction with respect to cam-shaped body 6. Small cylinder 10 is further provided with a transversal threaded through-hole 10a, with which threaded stem 3 engages: thereby stem 3 can be made integral with cam-shaped body 6 in a transversal direction to axis c-c', yet allowing free rotation of cam 6 with respect to the same axis.

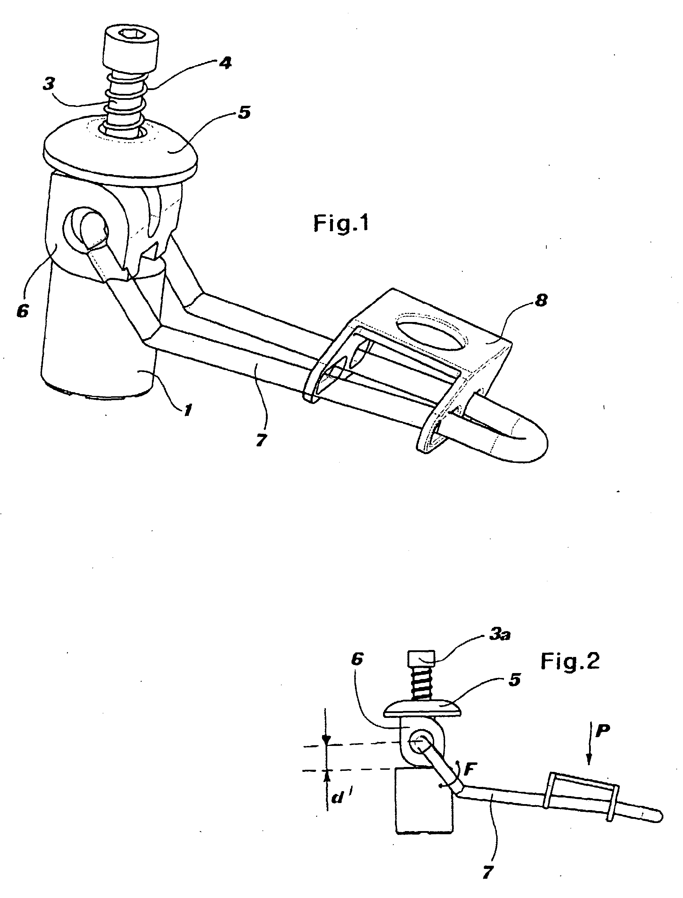

Cam-shaped body 6 has a curved working surface which, at least in the portion in contact with bottom 1b, progressively departs from the axis of rotation on an arch of a circle by about 90°, for example by 80°. In other words, the lower surface of the cam is such that, with a rotation by about 80° of cam-shaped body 6, the distance between axis of rotation c-c' and the tangential surface to the point where it rests on bottom 1b (distance d' in fig. 2) goes from a minimum to a maximum. Since threaded stem 3 is integral both with axis of rotation c-c', through small cylinder 10, and with bell-shaped element 2, the rotation of cam 6 is capable of causing a relative movement between hollow cylinder element 1 and bell 2, which results in the desired closure of jaws 2a during the tightening step of the device on the wheel bolt (not shown).

Integral with cam-shaped body 6 there is provided a manoeuvring bracket 7, exemplifyingly depicted in the drawings as a wire bent into a U-shape and joined at its ends to the two opposite sides of body 6, in correspondence of the axis of rotation. Bracket 7 is conceived as a manoeuvring member to enable the user to effect the rotation of cam 6.

The manoeuvring member is further provided with an attachment saddle 8, whereon the end of a constraint element (not shown) of the snow chain is intended to be fastened. Since the attachment element is preferably arranged in correspondence of the centre of rotation of the wheel, saddle 8 is freely slidable longitudinally to bracket 7 to be able to be arranged in a suitable position regardless of the radial distance between the bolt and the axis of rotation of the vehicle wheel.

For such purpose, saddle 8, according to the embodiment shown, has a base plate 8a, whereon there is arranged an attachment hole, as well as a pair of wings 8b provided with eyelets wherein the metal wire making up bracket 7 is intended to slide.

Through manoeuvring bracket 7, as already mentioned, it is possible to act manually to impose the desired rotation to cam-shaped body 6, as indicated by arrow F in fig. 2. For the purpose of the operation of the device, which will be better illustrated further on, cam-shaped body 6 is arranged so that the furthest distance d' is achieved with bracket 7 in a position substantially orthogonal to the axis of stem 3, i.e. in the condition illustrated in fig. 2. According to a preferred embodiment, cam-shaped body 6, in correspondence of the points of minimum and maximum rotation (0°-80°), has a rather flattened profile, which encourages resting distributed throughout the surface of bottom 1b and hence a stability of these two conditions.

Preferably, cam-shaped body 6 has a similar profile also in its upper portion, i.e. that surface intended to cooperate with the lower surface of plate 5.

The cam-shaped body further has a pair of slots 6a and 6b (the last one barely appreciable in the drawings) which extend by an arch of a circle of about 90° (80° in the example described here), wherein stem 3 can slide during the rotation of cam-shaped body 6 about axis c-c'. Evidently, should one want to maintain the integrity of the cam-shaped body, in the shape illustrated in the drawings, it is necessary for the two opposite slots/grooves 6a and 6b to develop along an arch of a circle certainly smaller than 90°, for example 80°. Should one want to allow a rotation close to or exceeding 90°, it is necessary for the cam portion of body 6 to be arranged on one side only, or on both sides, of stem 3, for example dividing cam-shaped body 6 into two distinct portions rotatably mounted at the two ends of small cylinder 10.

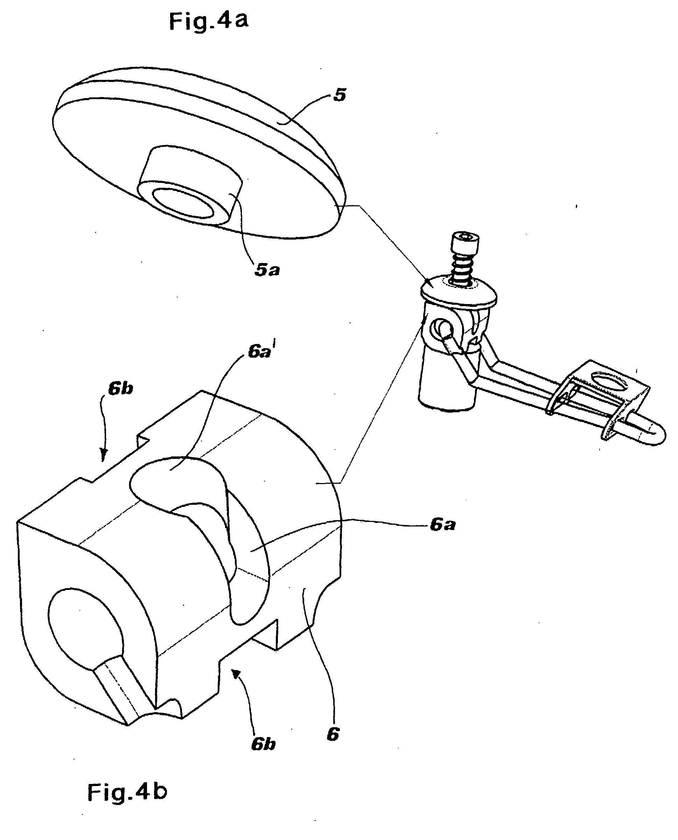

Upper slot 6a further has at least a widened end part 6a' (fig. 4B), in particular the end part which lies below plate 5. Plate 5 has a corresponding small collar 5a (fig. 4A) having a shape and size so as to fit tightly into widened part 6a' of slot 6a forming a circular seat. Thereby, when cam-shaped body 6 is at the end-of-stroke of its working position illustrated in fig. 2, collar 5a of plate 5 engages with seat 6a' and is kept there by the thrust of spring 4. This mutual engagement of collar 5a with seat 6a' makes cam-shaped body 6 integral in rotation with plate 5 and hence with stem 3: in this condition any rotation of body 6 and of corresponding bracket 7 with respect to axis c-c' is hence prevented. In order to enable the rotation of cam-shaped body 6, it is hence necessary to lift plate 5, overcoming the elastic thrust of spring 4, until disengagement of collar 5a from seat 6a'.

From the preceding description, the operation of the device according to the invention is now evident.

The user first "opens" the gripping device, i.e. disengages collar 5a from seat 6a' - lifting the plate from cam-shaped body 6 - and brings (through rotation in a direction opposite to arrow F) lever 7 in the position wherein distance d' is minimal and consequently bell-shaped body 2 is in the outermost position with respect to hollow cylinder element 1.

Following that, the user can couple bell-shaped body 2 with the chosen bolt. At this point, maintaining a certain pressure on the device so that it remains tightly mounted on the bolt, he acts on lever 7 to cause cam-shaped body 6 to rotate (in the direction of arrow F) and cause an increase of distance d' and hence a thrust acting on hollow cylinder element 1, which engages more deeply with bell-shaped body 2, causing the desired deformation thereof which results in clamping of the underlying bolt. Typically, the tightening action is achieved through a clockwise rotation of cam-shaped body 6 (in the plane of fig. 2), i.e. pushing on the lever in the direction indicated by arrow P (fig. 2). Once its end-of-stroke has been reached, collar 5a - due to the elastic thrust imparted on plate 5 by spring 4 - automatically engages with seat 6a' of slot 6, preventing an opposite rotation of lever 7, thereby stabilising the working tightening condition illustrated in fig. 2.

Once the device of the invention is firmly attached to the bolt, the user can fasten the constraint element and the corresponding snow chain to saddle 8 in a manner known per se.

In order to adjust the device to the specific bolt identified by the user on his vehicle - so that the working travel of bracket 7 is complete and collar 5a may engage with the end travel seat of slot 6a - it is possible to act on manoeuvring member 3a, for example through an Allen wrench, to screw or unscrew stem 3 in the hole 10a of small cylinder 10: this operation allows to determine the distance between the axis of rotation c-c' of cam-shaped body 6 and the centre of gravity of bell-shaped body 2. It is hence possible to adjust the relative position between bell-shaped body 2 and hollow cylinder element 1 in the two conditions of end-of-stroke of the cam: this, in the last analysis, allows to adjust the operation of the gripping portion to the size of the wheel bolt.

Thanks to the arrangement of the device according to the invention, the object set forth in the preliminary remarks has been fully achieved. As a matter of fact, despite its structural simplicity, and hence inexpensiveness, the device of the invention does not require the application of a torque to strengthen the attachment to the bolt, but simply requires to depress lever 7 until cam-shaped body 6 rotates by about 90°.

Moreover, according to the preferred embodiment, the working position of cam 6 is achieved through a clockwise rotation of the lever, i.e. a rotation which brings the distal end of lever 7 - i.e. the cantilever end, distant from the cam-shaped body - to approach the wheel rim: as can be guessed, this operation can hence be performed very easily by simply exerting a certain pressure with one hand, while with the other one bell-shaped body 2 is kept engaged with the wheel bolt.

In the present description no specific reference has been made to the materials employed to obtain the individual components, it being understood that any material of a suitable mechanical and environmental resistance may be used, such as stainless steel or a bronze alloy.

It is understood, however, that the invention is not limited to the specific embodiments illustrated above, which represent only non-limiting examples of the scope of the invention, but that a number of modifications can be made, all within the reach of a person skilled in the field, without departing from the scope of the invention, as described in the appended claims.

For example, plate 5 may also take up other shapes, provided it keeps its prerogative of coupling, in a dismountable fashion, cam-shaped body 6 with stem 3, to prevent accidental rotation of lever 7 from its working position.

Similarly, lever 7 can take up the shape most suitable on each occasion to users' requirements or to the specific snow chain with which it is meant to cooperate.

Finally, it is not ruled out that also the cam-shaped body can have a different profile, possibly optimised to achieve increased progressiveness of operation or a strong gripping force.

## Claims

1. Device for the attachment of a snow chain to a bolt of a vehicle wheel, of the type comprising a gripping portion consisting at least of a deformable bell-shaped body (2) which can be inserted more or less deeply into a hollow cylinder element (1) by actuating a control stem (3) at least axially integral with said bell body (2) and running through a hole (1a) of a bottom portion (1b) of said hollow cylinder (1), **characterised in that** it further comprises
a cam-shaped body (6) lockable in an axial direction to said stem (3) and provided with a cam profile apt to cooperate with said bottom portion (1b), and
a lever-actuated, manoeuvring member (7) apt to cause a rotation of said cam-shaped body (6) about a rotation axis (c-c'), the rotation of the cam-shaped body (6) causing a shifting (d') of said hollow cylinder element (1) with respect to said stem (3) and hence with respect to said bell-shaped body (2).

2. Device as claimed in claim 1), wherein said cam-shaped body (6) is rotatably mounted about a rotation axis (c-c') lying , transversally to said stem (3) and has a pair of mutually opposite slots (6a, 6b) which allow said stem (3) to run through it in all the rotation positions taken up by the cam-shaped body (6).

3. Device as claimed in claim 1) or 2), further comprising an intermediate engagement element (5) kept pushed against said cam-shaped body (6) by elastic thrust means (4), said engagement element (5) engaging with said cam-shaped body, to prevent rotation thereof, in a working position thereof wherein the maximum shifting of said hollow cylinder element (1) is obtained with respect to said stem (3).

4. Device as claimed in claim 3) when depending on claim 2), wherein said engagement element is shaped as a collar (5a), integral with a plate (5), which engages with a widened end portion (6a') of one of said slots (6a).

5. Device as claimed in any one of the preceding claims, wherein said cam-shaped body (6) has a central cylinder (10), freely rotating about said rotation axis (c-c'), intended to be fastened to said stem (3) .

6. Device as claimed in claim 5), wherein said stem (3) is threaded and said central cylinder (10) has correspondingly a threaded hole (10a), the fastening point of the stem to the cylinder being determined by the mutual coupling position of the stem(s) in the threaded hole (10a).

7. Device as claimed in claim 6), wherein said stem has a manoeuvring head (3a) engageable with a tool, whereby it is possible to screw on or off the stem (3) into said threaded hole (10a) of the cylinder (10).

8. Device as claimed in any one of the preceding claims, wherein said lever-shaped manoeuvring member (7) has a saddle-shaped element (8) whereto a restraint element of a snow chain can be attached, the saddle element (8) being capable of sliding freely along the longitudinal axis of the manoeuvring member.

9. Device as claimed in claim 2), wherein said cam profile has a curved surface which progressively departs from the axis of rotation over an arch of a circle below 90°, at least the final portion of the cam profile being substantially planar.

10. Device as claimed in claim 9), wherein said cam profile is arranged so that the shifting of said hollow cylinder element (1) with respect to said stem (3) increases with a rotation which draws the lever-shaped manoeuvring member (7) closer to the vehicle wheel.

## Patentansprüche

1. Vorrichtung zur Anbringung einer Schneekette an einem Bolzen eines Fahrzeugrads, der Art, die umfasst: einen Greifabschnitt, der mindestens aus einem verformbaren glockenförmigen Körper (2) besteht, der mehr oder weniger tief in ein Hohlzylinderelement (1) einführbar ist, indem ein Steuerschaft (3) betätigt wird, der mindestens axial einstückig mit dem Glockenkörper (2) ausgebildet ist und durch ein Loch (1a) eines Bodenabschnitts (1b) des Hohlzylinders (1) verläuft, **dadurch gekennzeichnet, dass** sie ferner umfasst:
einen nockenförmigen Körper (6), der in einer axialen Richtung zu dem Schaft (3) arretierbar ist und mit einem Nockenprofil versehen ist, das mit dem Bodenabschnitt (1b) zusammenwirken kann, und
ein hebelbetätigtes Handhabungselement (7), das eine Drehung des nockenförmigen Körpers (6) um eine Drehachse (c-c') bewirken kann, wobei die Drehung des nockenförmige Körpers (6) eine Verschiebung (d') des Hohlzylinderelements (1) bezogen auf den Schaft (3) und folglich bezogen auf den glockenförmigen Körper (2) bewirkt.

2. Vorrichtung nach Anspruch 1), **dadurch gekennzeichnet, dass** der nockenförmige Körper (6) um eine Drehachse (c-c') drehbar befestigt ist, die quer zu dem Schaft (3) liegt und ein Paar von einander gegenüberliegenden Schlitzen (6a, 6b) aufweist, die ermöglichen, dass der Schaft (3) in allen von dem nockenförmigen Körper (6) angenommenen Drehpositionen durch diesen hindurch verläuft.

3. Vorrichtung nach Anspruch 1) oder 2), ferner umfassend: ein Eingriffszwischenelement (5), das durch elastische Schubmittel (4) gegen den nockenförmigen Körper (6) gedrückt gehalten wird, wobei das Eingriffselement (5) in Eingriff mit dem nockenförmigen Körper steht, um in einer Arbeitsposition desselben, in der die maximale Verschiebung des Hohlzylinderelements (1) bezogen auf den Schaft (3) erreicht wird, eine Drehung desselben zu verhindern.

4. Vorrichtung nach Anspruch 3), sofern abhängig von Anspruch 2), **dadurch gekennzeichnet, dass** das Eingriffselement als ein einstückig mit einer Platte (5) ausgebildeter Kragen (5a) ausgebildet ist, der mit einem verbreiterten Endabschnitt (6a') eines der Schlitze (6a) in Eingriff steht.

5. Vorrichtung nach einem der vorangehenden Ansprüche, **dadurch gekennzeichnet, dass** der nockenförmige Körper (6) einen sich frei um die Drehachse (c-c') drehenden mittigen Zylinder (10) aufweist, der zur Befestigung an dem Schaft (3) vorgesehen ist.

6. Vorrichtung nach Anspruch 5), **dadurch gekennzeichnet, dass** der Schaft (3) mit einem Gewinde versehen ist und der mittige Zylinder (10) entsprechend ein mit einem Gewinde versehenes Loch (10a) aufweist, wobei der Befestigungspunkt des Schafts an dem Zylinder durch die Kupplungsposition des Schafts/der Schäfte in dem mit einem Gewinde versehenen Loch (10a) bestimmt wird.

7. Vorrichtung nach Anspruch 6), **dadurch gekennzeichnet, dass** der Schaft einen Handhabungskopf (3a) aufweist, der mit einem Werkzeug in Eingriff bringbar ist, wodurch es möglich ist, den Schaft (3) in das mit einem Gewinde versehene Loch (10a) des Zylinders (10) ein- oder auszuschrauben.

8. Vorrichtung nach einem der vorangehenden Ansprüche, **dadurch gekennzeichnet, dass** das hebelförmige Handhabungselement (7) ein sattelförmiges Element (8) aufweist, an dem ein Rückhalteelement einer Schneekette anbringbar ist, wobei das Sattelelement (8) frei entlang der Längsachse des Handhabungselements gleiten kann.

9. Vorrichtung nach Anspruch 2), **dadurch gekennzeichnet, dass** das Nockenprofil eine gekrümmte Oberfläche aufweist, die sich allmählich über einen Kreisbogen unter 90° von der Drehachse entfernt, wobei mindestens der Endabschnitt des Nockenprofils im Wesentlichen plan ist.

10. Vorrichtung nach Anspruch 9), **dadurch gekennzeichnet, dass** das Nockenprofil so angeordnet ist, dass die Verschiebung des Hohlzylinderelements (1) bezogen auf den Schaft (3) mit einer Drehung, die das hebelförmige Handhabungselement (7) näher an das Fahrzeugrad zieht, zunimmt.

## Revendications

1. Dispositif pour attacher une chaîne à neige à un goujon d'une roue de véhicule, du type comportant une partie de serrage constituée d'au moins un corps (2) en forme de cloche déformable qui peut être inséré plus ou moins profondément dans un élément cylindrique creux (1) par l'actionnement d'une tige de commande (3) au moins axialement intégrée avec ledit corps en cloche (2) et passant dans un trou (1a) d'une partie de fond (1b) dudit cylindre creux (1), **caractérisé en ce qu'**il comporte en outre
un corps (6) en forme de came pouvant être bloqué dans une direction axiale sur ladite tige (3) et pourvu d'un profil de came apte à coopérer avec ladite partie de fond (1b), et
un élément de manoeuvre (7), actionné par levier, apte à provoquer une rotation dudit corps (6) en forme de came autour d'un axe de rotation (c-c'), la rotation du corps (6) en forme de came provoquant un déplacement (d') dudit élément à cylindre creux (1) par rapport à ladite tige (3) et donc par rapport audit corps (2) en forme de cloche.

2. Dispositif selon la revendication 1, dans lequel ledit corps (6) en forme de came est monté de façon à pouvoir tourner autour d'un axe de rotation (c-c') s'étendant transversalement à ladite tige (3) et présente deux rainures mutuellement opposées (6a, 6b) qui permettent à ladite tige (3) de se déplacer à travers lui dans toutes les positions de rotation prises par le corps (6) en forme de came.

3. Dispositif selon la revendication 1 ou 2, comportant en outre un élément d'engagement intermédiaire (5) maintenu poussé contre ledit corps (6) en forme de came par un moyen de poussée élastique (4), ledit élément d'engagement (5) entrant en engagement avec ledit corps en forme de came, afin d'empêcher sa rotation, dans une position de travail de celui-ci dans laquelle le déplacement maximal dudit élément à cylindre creux (1) est obtenu par rapport à ladite tige (3).

4. Dispositif selon la revendication 3, lorsqu'elle dépend de la revendication 2, dans lequel ledit élément d'engagement est réalisé sous la forme d'une bague (5a), intégrée à une plaque (5), qui entre en engagement avec une partie extrême élargie (6a') de l'une desdites rainures (6a).

5. Dispositif selon l'une quelconque des revendications précédentes, dans lequel ledit corps (6) en forme de came comporte un cylindre central (10), tournant librement autour dudit axe de rotation (c-c'), prévu pour être fixé à ladite tige (3).

6. Dispositif selon la revendication 5, dans lequel ladite tige (3) est filetée et ledit cylindre central (10) présente de façon correspondante un trou taraudé (10a), le point de fixation de la tige au cylindre étant déterminé par la position d'accouplement mutuel de la ou des tiges dans le trou taraudé (10a).

7. Dispositif selon la revendication 6, dans lequel ladite tige comporte une tête de manoeuvre (3a) pouvant être engagée avec un outil, grâce à quoi il est possible de visser ou de dévisser la tige (3) dans ledit trou taraudé (10a) du cylindre (10).

8. Dispositif selon l'une quelconque des revendications précédentes, dans lequel ledit élément de manoeuvre (7) en forme de levier comporte un élément (8) en forme de selle auquel un élément de retenue d'une chaîne à neige peut être attaché, l'élément (8) en forme de selle pouvant coulisser librement le long de l'axe longitudinal de l'élément de manoeuvre.

9. Dispositif selon la revendication 2, dans lequel ledit profil de came a une surface courbe qui s'écarte progressivement de l'axe de rotation sur un arc de cercle inférieur à 90°, au moins la partie finale du profil de came étant sensiblement plane.

10. Dispositif selon la revendication 9, dans lequel ledit profil de came est agencé de façon que le déplacement dudit élément à cylindre creux (1) par rapport à ladite tige (3) augmente avec une rotation qui rapproche par traction l'élément de manoeuvre (7) en forme de levier de la roue du véhicule.
